# EUROPÄISCHE PATENTSCHRIFT

(11) **EP 0 512 412 B1**
(45) Veröffentlichungstag und Bekanntmachung des Hinweises auf die Patenterteilung: **28.06.1995**
(21) Anmeldenummer: 92107384.7
(22) Anmeldetag: 30.04.1992
(51) Int. Cl.: F16L 11/12, B44C 1/17

(54) **Verfahren zur Herstellung eines Schlauches**
Method of manufacturing a hose
Procédé de fabrication d'un tuyau

(30) Priorität: 07.05.1991 DE 4114813
(43) Veröffentlichungstag der Anmeldung: 11.11.1992
(73) Patentinhaber: Continental Aktiengesellschaft, 30165 Hannover (DE); Ehlers, Karlheinz, D-22501 Hamburg (DE)
(72) Erfinder: Emde, Willi, W-3456 Vöhl-Dasdorf (DE); Ehlers, Karlheinz, W-2000 Hamburg 54 (DE)
(74) Vertreter: Schneider, Egon

(56) Entgegenhaltungen:
- EP-A- 0 126 306
- EP-A- 0 143 247
- DE-A- 2 460 586
- DE-A- 3 820 111
- DE-A- 3 825 342
- GB-A- 1 434 015

## Beschreibung

Die Erfindung betrifft ein Verfahren zur Herstellung eines Schlauches gemäß dem Oberbegriff des Patentanspruchs 1.

Derartige Schläuche, die auf ihrer Mantelfläche kontrastierende, insbesondere farbige, Kennzeichnungen in Form von geschlossenen oder nahezu geschlossenen Ringen aufweisen, werden in großem Umfang als Betankungsschläuche und als Spezialschläuche zur Förderung von chemisch aggressiven Medien verwendet, wobei die insbesondere farbige Kennzeichnung dem Benutzer in eindeutiger Weise den empfohlenen bzw. zugelassenen Anwendungsbereich der betreffenden Schläuche signalisiert. Die Anbringung der ringförmigen Kennzeichnungen erfolgte bisher in der Weise, daß man in vorgegebenen Abständen entsprechend kontrastierend eingefärbte schmale Folienstreifen, deren Länge etwa dem Schlauchumfang entsprach, manuell in Umfangsrichtung auf die Schlauchrohlinge auflegte, die Schlauchrohlinge dann in üblicher Weise mit einer formhaltenden Ummantelung - beispielsweise einem wendelig aufgebrachten Gewebestreifen - versah und sie in dieser Ummantelung vulkanisierte, vgl. EP-A- 0 126 306.

Dieses Verfahren wies verschiedene Nachteile auf: Die manuelle Anbringung der ringförmigen Kennzeichnungen in Form von einzelnen Folienstreifen war zeit- und somit kostenaufwendig, und bezüglich der axialen Abstände der Kennzeichnungen mußten relativ große Toleranzen in Kauf genommen werden. Ferner entstand durch die formhaltende Ummantelung, deren Struktur bei der Vulkanisation unmittelbar auf die Schlauchoberfläche, einschließlich der ringförmigen Kennzeichnungen, abgeformt wurde, eine Oberflächenrauhigkeit, die die Verschmutzung der Schläuche und insbesondere der Kennzeichnungen im praktischen Einsatz begünstigte und infolge derer ein höherer Kraftaufwand erforderlich war, um die Schläuche auf einer Unterlage - beispielsweise auf dem Boden - in Längs- oder Querrichtung zu verschieben.

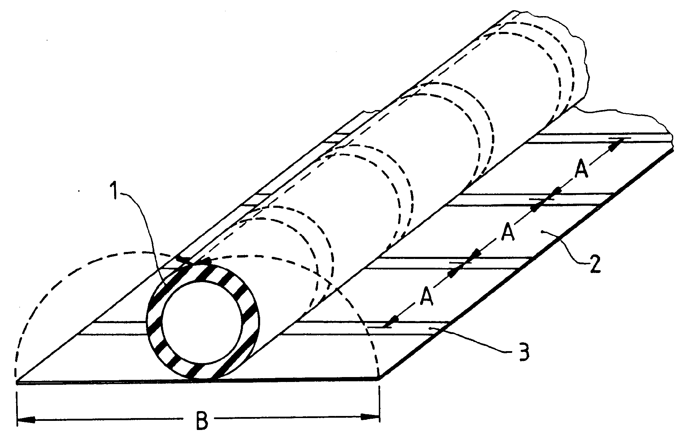

Gemäß der vorliegenden Erfindung werden diese Nachteile bei einem Verfahren zur Herstellung eines Schlauches der eingangs genannten Art durch die im kennzeichnenden Teil des Patentanspruchs 1 angegebenen Maßnahmen überwunden. Wie die beigefügte Zeichnung veranschaulicht, wird bei dem vorgeschlagenen Verfahren ein in üblicher Weise angefertigter Schlauchrohling 1, der entsprechend dem Verwendungszweck des daraus herzustellenden Schlauches beispielsweise eine chemikalienresistente Innenauskleidung sowie verschiedene in seine Wandung eingebettete Verstärkungseinlagen aufweisen kann, in einen sich in Schlauchlängsrichtung erstreckenden Folienstreifen 2 eingeschlagen, dessen Breite B gleich oder annähernd gleich dem Schlauchumfang bemessen ist. Dieser beispielsweise aus Polypropylen gebildete Folienstreifen 2 trägt auf seiner dem Schlauchrohling 1 zugewandten Rückseite quer zu seiner Längsrichtung genau äquidistante Streifen oder streifenartige Kennzeichnungen aus mindestens einer mit der Schlauchoberfläche zusammenvulkanisierbaren Farbsubstanz 3, die zur Schlauchoberfläche farblich kontrastiert und beispielsweise im Siebdruckverfahren auf den Folienstreifen aufgebracht ist. Der in den Folienstreifen 2 eingeschlagene Schlauchrohling 1 wird dann in üblicher Weise mit einer formhaltenden Ummantelung, beispielsweise in Form eines wendelig gewickelten Gewebestreifens, versehen und in dieser vulkanisiert. Bei der Vulkanisation verbindet sich die Farbsubstanz 3 mit der Schlauchoberfläche, so daß anschließend nach Entfernung der Ummantelung der Folienstreifen 2 ohne die Farbsubstanz 3 von der Schlauchoberfläche abgezogen werden kann. Die Farbsubstanz 3 bildet dann auf der Schlauchoberfläche ringförmige Kennzeichnungen, die ebenso wie die Streifen der Farbsubstanz 3 auf dem Folienstreifen 2 zueinander genau äquidistant angeordnet sind.

Als Folienstreifen 2 wird vorzugsweise ein Längsabschnitt einer Folienbahn verwendet, deren Breite ein Mehrfaches der Breite des Folienstreifens beträgt und die quer zu ihrer Längsrichtung mit äquidistanten, parallelen, ggf. mehrfarbigen Streifen aus mindestens einer mit der Schlauchoberfläche zusammenvulkanisierbaren Farbsubstanz 3 bedruckt ist und die durch im Abstand B, der dem Schlauchumfang entspricht, durchgeführte Längsschnitte in eine Vielzahl von Folienstreifen 2 zerteilt wird.

Da es keine Schwierigkeiten bereitet, auf eine solche Folienbahn exakt äquidistante Streifen aus mit der Schlauchoberfläche zusammenvulkanisierbaren Farbsubstanzen 3 aufzubringen - beispielsweise mit Hilfe einer Siebdruckvorrichtung - gewährleistet das so durchgeführte erfindungsgemäße Verfahren, daß auch die hierdurch auf der Schlauchoberfläche erzeugten ringförmigen Kennzeichnungen exakt gleiche gegenseitige Abstände aufweisen. Dabei ergibt sich aus der Verwendung von Folienstreifen 2 die aus einer ursprünglich breiten Folienbahn durch einfache Längsunterteilung gewonnen werden, ein erheblicher Rationalisierungseffekt. Zudem vereinfacht sich die Lagerhaltung, denn aus einer solchen Folienbahn können je nach Bedarf Folienstreifen 2 unterschiedlicher Breite für unterschiedliche Schlauchumfänge erzeugt werden.

Mit besonderem Vorteil wird das erfindungsgemäße Verfahren mit Folienstreifen 2 durchgeführt, auf denen die aus der Farbsubstanz 3 bzw. verschiedenen Farbsubstanzen gebildeten Farbstreifen zueinander unveränderlich einen Mittenabstand A aufweisen, der genau einer Maßeinheit - insbesonders 1 Meter - oder ganzzahlige Bruchteile oder Vielfache dieser Maßeinheit beträgt, und zwar vorzugsweise zuzüglich einer Schrumpfzugabe, durch die gegebenenfalls ein während der Vulkanisation des Schlauches auftretender Längsschrumpf kompensiert wird. Bei einem auf diese Weise hergestellten Schlauch dienen die exakt äquidistant auf seiner Mantelfläche angeordneten Farbringe nicht nur zur Kennzeichnung des Schlauchtyps, sondern sie bilden gleichzeitig einen - entsprechend der verwendeten Maßeinheit - genauen Maßstab zum Ablängen von Schlauchabschnitten und zur Abschätzung der Länge von Reststücken.

Zusätzlich löst das erfindungsgemäße Verfahren die im Vorstehenden erwähnte Aufgabe, dem Schlauch eine glattere, schmutzabweisende Oberfläche zu geben und ihn durch Verringerung des Reibungswiderstandes seiner Oberfläche auch auf rauhem Untergrund leichter in Längs- und Querrichtung verschiebbar zu machen. Der Folienstreifen 2, der vorzugsweise eine völlig glatte Oberfläche aufweist und von dem der Schlauch beim erfindungsgemäßen Verfahren während der Vulkanisation vollständig umschlossen ist, verhindert nämlich, daß eine Struktur der formhaltenden Ummantelung sich in vollem Maße auf die Schlauchoberfläche überträgt und bewirkt, daß die Schlauchoberfläche eine solche Struktur allenfalls in stark eingeebneter und geglätteter Form aufweist.

## Patentansprüche

1. Verfahren zur Herstellung eines Schlauches mit auf der Außenseite seines Mantels äquidistant angebrachten Kennzeichnungen in Form von zur Farbe des Schlauchmantels kontrastierenden, insbesondere farbigen Ringen, **dadurch gekennzeichnet**, daß der Schlauchrohling (1) in einen sich in Schlauchlängsrichtung erstreckenden Folienstreifen (2) eingeschlagen wird, dessen Breite (B) gleich oder annähernd gleich dem Schlauchumfang bemessen ist und der auf seiner dem Schlauch zugewandten Rückseite sich quer zu seiner Längsrichtung erstreckende, zur Schlauchoberfläche kontrastierende, insbesondere farbige, genau äquidistante Streifen oder streifenartige Kennzeichnungen aus mindestens einer mit der Schlauchoberfläche zusammenvulkanisierbaren Farbsubstanz (3) aufweist, daß der Schlauchrohling (1) anschließend in üblicher Weise mit einer formhaltenden Ummantelung versehen und vulkanisiert wird und daß dann die Ummantelung entfernt und der Folienstreifen (2) ohne die Farbsubstanz (3) von der Schlauchoberfläche abgezogen wird.

2. Verfahren nach Anspruch 1, dadurch gekennzeichnet, daß als Folienstreifen (2) ein Längsabschnitt einer Folienbahn verwendet wird, die über die gesamte Bahnbreite sich quer zur Bahnlängsrichtung erstreckende, zueinander äquidistante parallele Streifen aus mindestens einer mit der Schlauchoberfläche zusammenvulkanisierbaren Farbsubstanz (3) aufweist.

3. Verfahren nach Anspruch 1 oder 2, dadurch gekennzeichnet, daß der Mittenabstand (A) der Farbstreifen auf den verwendeten Folienstreifen (2) jeweils unveränderlich eine Maßeinheit - insbesondere 1 Meter - oder ganzzahlige Bruchteile oder Vielfache dieser Maßeinheit, vorzugsweise zuzüglich einer Schrumpfzugabe, beträgt.

## Claims

1. Method of producing a hose with markings, which are applied equidistantly to the outer surface of its casing and are in the form of rings which contrast with the colour of the hose casing, more especially coloured rings, characterised in that the hose blank (1) is wrapped in a film strip (2), which extends in the longitudinal direction of the hose and the width (B) of which is dimensioned to be equal or approximately equal to the hose circumference, the rear surface of said film strip facing the hose having exactly equidistant strips or strip-like markings, which extend transversely relative to its longitudinal direction and contrast with the hose surface, more especially coloured strips or markings, which are formed from at least one colour substance (3), which can be vulcanised together with the hose surface, in that the hose blank (1) is subsequently provided in conventional manner with a rigid covering and vulcanised, and in that the covering is then removed and the film strip (2) is withdrawn from the hose surface without the colour substance (3).

2. Method according to claim 1, characterised in that an elongate portion of a film web is used as film strip (2), said film web having parallel strips which extend over the entire web width transversely relative to the longitudinal direction of the web and are equidistant from one another, said strips being formed from at least one colour substance (3), which can be vulcanised together with the hose surface.

3. Method according to claim 1 or 2, characterised in that the centre-to-centre distance (A) of the colour strips on the film strips (2) used amounts in each case invariably to a unit of measure - more especially 1 metre - or integral fractions or multiples of this unit of measure, preferably with an extra allowance for shrinkage.

## Revendications

1. Procédé de fabrication d'un tuyau avec des marquages, équidistants, appliqués sur le côté extérieur de sa gaine sous la forme d'anneaux en particulier colorés, d'une couleur contrastant avec celle de la gaine du tuyau, caractérisé en ce que l'ébauche (1) du tuyau est enfoncée dans une bande de feuille (2) s'étendant dans la direction longitudinale du tuyau, dont la largeur (B) est égale ou approximativement égale au périmètre du tuyau et qui présente, sur sa face arrière tournée vers le tuyau, des bandes ou des marques en forme de bandes exactement équidistantes, contrastant avec la surface du tuyau, en particulier colorées, s'étendant transversalement à sa direction longitudinale, faites d'au moins une substance colorée (3) pouvant être vulcanisée avec la surface du tuyau, en ce que l'ébauche de tuyau (1) est ensuite pourvue de manière usuelle d'un gainage maintenant sa forme et vulcanisée et en ce qu'ensuite le gainage est enlevé et la bande de feuille (2) est retirée sans la substance colorée (3) de la surface du tuyau.

2. Procédé selon la revendication 1, caractérisé en ce qu'on utilise comme bande de feuille (2) une partie longitudinale d'une feuille continue, qui présente, sur toute sa largeur, des bandes s'étendant transversalement à la direction longitudinale de la feuille, équidistantes et parallèles entre elles faites d'au moins une substance colorée (3) pouvant être vulcanisée avec la surface du tuyau.

3. Procédé selon la revendication 1 ou 2, caractérisé en ce que la distance de centre à centre (A) des bandes colorées sur les bandes de feuille (2) utilisées est égale invariablement à une unité de mesure - en particulier à 1 mètre - ou à des fractions entières ou des multiples de cette unité de mesure, augmentées de préférence d'un supplément pour retrait.
